# EUROPÄISCHE PATENTSCHRIFT

(11) **EP 0 868 053 B1**
(45) Veröffentlichungstag und Bekanntmachung des Hinweises auf die Patenterteilung: **19.03.2008**
(21) Anmeldenummer: 98104054.6
(22) Anmeldetag: 06.03.1998
(51) Int. Cl.: H04L 12/56, H04Q 11/04

(54) **Redundantes Übertragungssystem mit Abschaltung einer Übertragungsstrecke fehlerhaften Übertragungsverhaltens**
Redundant transmission system with shutdown of a faulty transmission link
Système redondant de transmission avec l'arrêt d'une voie défectueuse de transmission

(30) Priorität: 27.03.1997 DE 19713065
(43) Veröffentlichungstag der Anmeldung: 30.09.1998
(73) Patentinhaber: Nokia Siemens Networks GmbH & Co. KG, 81541 München (DE)
(72) Erfinder: Worster, Thomas, Boston, MA 02116 (US)

(56) Entgegenhaltungen:
- EP-A- 0 453 606
- GB-A- 2 236 930
- US-A- 5 450 397

## Beschreibung

Der Anmeldungsgegenstand betrifft ein Verfahren nach dem Oberbegriff des Anspruchs 1. Ein derartiges Verfahren ist aus der EP-0 384 936, EP-0 453 606, US 5 450 397, GB 2 236 930 oder EP-0 453 607 bekannt.

Bei der ATM (Asynchronous Transfer Mode)- Übertragung ist die Reihenfolge der Nachrichtenzellen, die einer virtuellen Verbindung zugehören, einzuhalten. Zur Bezeichnung der Reihenfolge führen die Nachrichtenzellen eine zyklisch fortlaufend vergebene Folgenummer in einem Feld für die Folgenummer mit sich. Zur Einhaltung einer vorgegebenen Verlustwahrscheinlichkeit kann eine parallele Weiterleitung, Durchschaltung über redundante Übertragungsstrecken erforderlich sein. In der Empfangseinrichtung wird unter den redundant übertragenen Nachrichtenzellen nur eine in der Reihenfolge als nächste erwartete Nachrichtenzelle ausgewählt. Aus der EP-0 384 936, EP-0 453 606 oder EP-0 453 607 sind Algorithmen bekannt, bei denen jede Nachrichtenzelle, die die auf die augenblicklich als letzte zur Weiterbehandlung angenommene Nachrichtenzelle nächstfolgende Nachrichtenzelle ist und jede Nachrichtenzelle, die auf der selben Übertragungsstrecke (aktive Übertragungsstrecke) wie die augenblicklich als letzte zur Weiterbehandlung angenommene Nachrichtenzelle ankommt, zur Weiterbehandlung angenommen wird.

Dem Anmeldungsgegenstand liegt das Problem zugrunde, ein Verfahren anzugeben, das eine schnelle Abschaltung einer fehlerhaft arbeitenden Übertragungsstrecke trotz Tolerierung von sporadisch auf der Übertragungsstrecke auftretender Verluste von Nachrichtenzellen realisiert.

Das Problem wird bei dem im Oberbegriff umrissenen Gegenstand durch die Merkmale des kennzeichnenden Teil des Anspruchs 1 gelöst.

Der Anmeldungsgegenstand realisiert für eine Übertragungsstrecke eine Überwachung, die einerseits gegenüber durchaus normalen Verlusten einzelner Nachrichtenzellen tolerant ist und die andererseits bei einem für substantielle Fehler charakteristischen Anstieg der Fehlerrate eine Abschaltung der Übertragungsstrecke mit sich bringt. Nach einer Abschaltung der Übertragungsstrecke ist für eine Zulassung eine Mehrzahl von als fehlerfrei empfangenen Nachrichtenzellen notwendig, was sicherstellt, daß nur eine ein gehobenes Maß an Fehlerfreiheit aufweisende Übertragungsstrecke eingeschaltet wird.

Eine besondere Weiterbildung des Anmeldungsgegenstandes ist dadurch gegeben, daß der erste Wert kleiner als der zweite Wert ist. Diese Maßnahme bringt neben einer Toleranz gegenüber durchaus normalen Verlusten einzelner Nachrichtenzellen eine beschleunigte Abschaltung der Übertragungsstrecke bei substantiellen Fehlern mit sich. Gegenüber der kleinen Anzahl zur Abschaltung erforderlichen Fehler ist für eine Zulassung der Übertragungsstrecke eine große Anzahl von fehlerfrei empfangenen Nachrichtenzellen notwendig, was sicherstellt, daß nur eine ein hohes Maß an Fehlerfreiheit aufweisende Übertragungsstrecke eingeschaltet wird.

Eine besondere Weiterbildung des Anmeldungsgegenstandes ist dadurch gegeben, daß eine Zulassung einer Übertragungsstrecke zur Annahme von Nachrichtenzellen erst nach Überschreitung eines oberen Schwellwertes erfolgt. Diese Maßnahme bringt eine Hysterese zwischen Aus- und Einschalten mit sich, was zum einen ein allzuhäufiges Aus- und Einschalten verhindert und zum anderen ein Einschalten der Übertragungsstrecke erst bei Erreichen eines hohen Maßes an Fehlerfreiheit sicherstellt.

Eine besondere Weiterbildung des Anmeldungsgegenstandes ist dadurch gegeben, daß einer Übertragungsstrecke ein Zustandszeichen (Q) zugeordnet ist, das bei Erreichen des unteren Schwellwertes zurückgesetzt wird und das bei Überschreiten des oberen Schwellwertes gesetzt wird, wobei der Ausschluß bzw. die Zulassung der zugehörigen Übertragungsstrecke nach Maßgabe des Zustandszeichens gegeben ist. Diese Maßnahme bringt eine einfache Schnittstelle zu dem Auswahlalgorithmus mit sich.

Eine besondere Weiterbildung des Anmeldungsgegenstandes ist dadurch gegeben, daß die Zustandszeichen Q für alle bis auf einen Übertragungsweg unabhängig von den zugehörigen Zählerständen zurückgesetzt werden. Diese Maßnahme bringt einen von einem Operator manuell bewirkten Betrieb mit nur einem Übertragungsweg mit sich.

Der Anmeldungsgegenstand wird im Folgenden als Ausführungsbeispiel in einem zum Verständnis erforderlichen Umfang anhand von Figuren näher beschrieben. Dabei zeigen:
- Figur 1: eine schematische Darstellung einer Vermittlungseinrichtung, die nach einem asynchronen Übertragungsverfahren weitergeleitete Nachrichtenzellen über redundante Übertragungsstrecken durchschaltet
- Figur 2: eine prinzipielle Darstellung einer Nachrichtenzelle
- Figur 3: eine Darstellung des anmeldungsgemäßen Verfahrens als Ablauffolge.

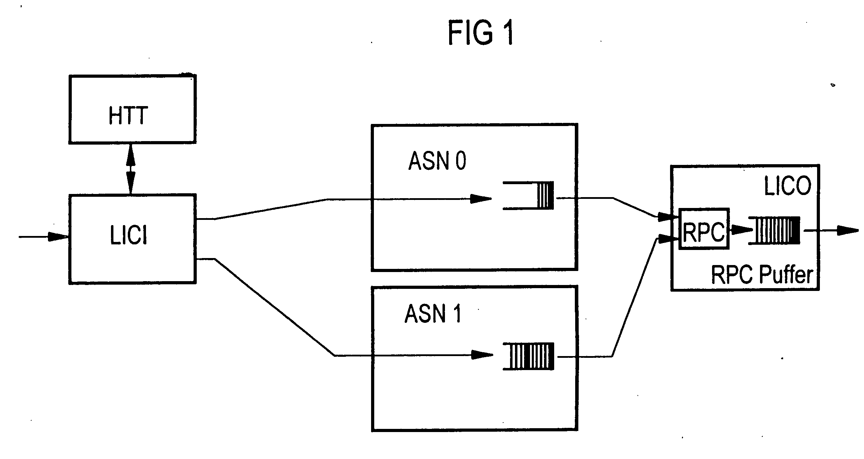

Die in Figur 1 dargestellte Vermittlungseinrichtung weist eingangsseitig eine Eingangseinrichtung LICI (für: Line Interface Circuit Input) auf, der im Zuge von virtuellen Verbindungen nach einem asynchronen Übertragungsverfahren, insbesondere dem ATM (Asynchronous Transfer Mode) -Verfahren übertragene Nachrichtenzellen zugeführt sind. Es können beispielsweise 8192 virtuelle Verbindungen gegeben sein.

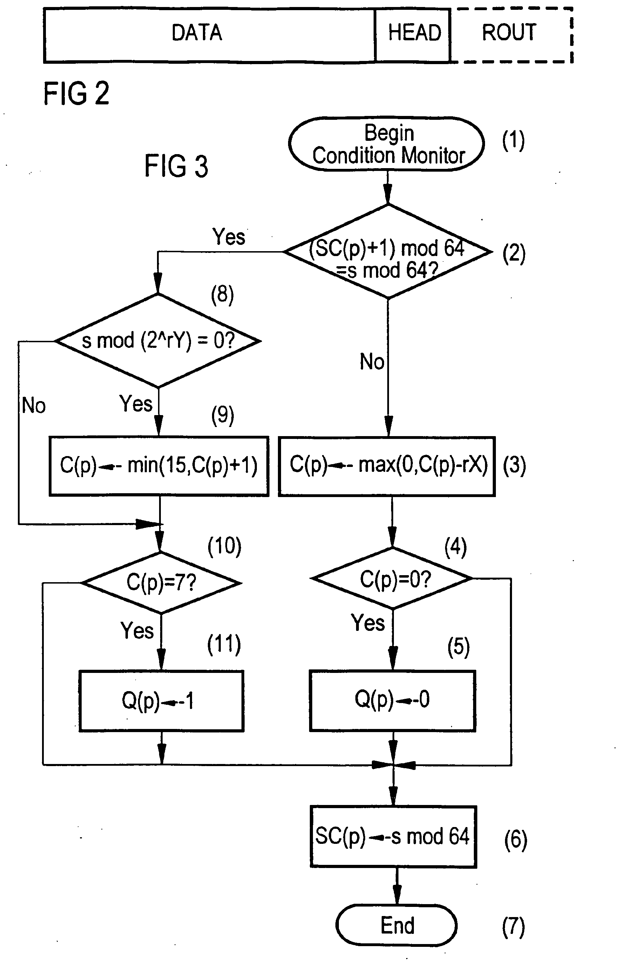

Eine in Figur 2 dargestellte Nachrichtenzelle weist eine feste Länge auf und ist mit einem Nutzdatenteil DATA und einem diesem vorangestellten Nachrichtenzellenkopf HEAD gebildet. Der Nutzdatenteil möge 48 Byte und der Nachrichtenzellenkopf möge 5 Byte Länge aufweisen. Der Nachrichtenzellenkopf weist eine Zielinformation VPI (Virtual Path Identifier) /VCI (Virtual Channel Identifier) auf, die die Nachrichtenzelle als einer virtuellen Verbindung zugehörig und die den Empfänger angibt. Bei Ankunft einer Nachrichtenzelle in der Eingangseinrichtung wird die Zielinformation der Nachrichtenzelle einer Umwerteeinrichtung HTT (für: Header Translation Table) zugeführt, die nach Maßgabe der Zielinformation ein Beifügen einer Durchschalteinformation ROUT (für: Routing) zu der Nachrichtenzelle bewirkt. Die Durchschalteinformation gibt den Ausgang der Vermittlungseinrichtung an, zu dem die Nachrichtenzelle über eine Koppelfeldscheibe ASN (für: Asynchronous Switching Network) durchgeschaltet werden soll. Zur Einhaltung einer vorgegebenen Verlustwahrscheinlichkeit von beispielsweise 10⁻⁹ kann eine parallele Durchschaltung über redundante Koppelfeldscheiben erforderlich sein. Die Vermittlungseinrichtung weist zwei zueinander redundante Koppelfeldscheiben ASN0, ASN1 auf, die redundante Übertragungsstrecke bilden. In der Eingangseinrichtung erfolgt eine Vermehrfachung der Nachrichtenzellen entsprechend der Anzahl der Koppelfeldscheiben, im Ausführungsbeispiel eine Verdoppelung, zu einer Gruppe von Nachrichtenzellen gleichen Inhalts. Eine Nachrichtenzelle weist eine Folgenummer auf, die für aufeinanderfolgende, einer virtuellen Verbindung zugehörigen Nachrichtenzellen zyklisch fortlaufend zugeteilt ist. Die Folgenummern mögen den Nachrichtenzellen in aufsteigender Zählrichtung zugeordnet werden. Die voneinander unterscheidbaren Folgenummern SNmax (für: Sequenz Number maximum) einer virtuellen Verbindung legen einen Nachrichtenzellen-Folgezyklus NZZ fest. Die Nachrichtenzellen einer Gruppe weisen dieselbe Folgenummer auf. Über die redundanten Koppelfeldscheiben wird jeweils eine Nachrichtenzelle aus einer Gruppe von Nachrichtenzellen zu dem betreffenden Ausgang durchgeschaltet.

Die redundanten Koppelfeldscheiben weisen an ihren Ausgängen große Speicher zur Pufferung von Nachrichtenzellen auf. Zwischen zueinander redundanten Nachrichtenzellen, die der Auswahleinrichtung von den Koppelfeldscheiben zugeführt sind, kann es zu einer Phasenverschiebung kommen. Zur Vermeidung von Reihenfolgefehlern zwischen derselben virtuellen Verbindung zugehörigen Nachrichtenzellen ist die Dauer eines Nachrichtenzellen-Folgezyklus' größer als die maximal zu erwartende Laufzeitdifferenz zwischen den Übertragungsstrecken.

Die von den redundanten Koppelfeldscheiben abgegebenen Nachrichtenzellen werden von einer Ausgangseinrichtung LICO (für: Line Interface Circuit Output) empfangen. In der Ausgangseinrichtung werden die empfangenen Nachrichtenzellen auf Fehlerhaftigkeit überprüft. Dies kann durch Überprüfung von Paritätsbits gegeben sein. Als fehlerhaft festgestellte Nachrichtenzellen werden verworfen. Die Ausgangseinrichtung weist eine Auswahleinrichtung RPC (für: Redundant Path Combination) auf, die aus einer Gruppe von als fehlerfrei empfangenen Nachrichtenzellen nur eine Nachrichtenzelle auswählt und weiterbehandelt. Die Weiterbehandlung mag durch eine Weiterleitung über einen RPC Puffer und eine Leitung zu einer entfernt angeordneten Einrichtung gegeben sein.

Bei der Weiterleitung von Nachrichtenzellen nach dem ATM-Übertragungsverfahren ist für eine virtuelle Verbindung die Reihenfolge der Nachrichtenzellen einzuhalten.

Die Auswahleinrichtung weist eine Speichereinrichtung mit wahlfreiem Zugriff RAM (für: random access memory) auf, die für jede virtuelle Verbindung VC1, VC2, ..,VCn eine Speicherzeile aufweist. In der Speicherzeile ist ein Platz SC zur Abspeicherung der Folgenummer SL der für die betreffende virtuelle Verbindung zuletzt weitergeleiteten Nachrichtenzelle reserviert. Weiter ist in der Speicherzeile für jede Verbindung ein Speicherplatz a reserviert, der die Übertragungsstrecke bezeichnet, über die die augenblicklich als letzte zur Weiterleitung ausgewählte Nachrichtenzelle der betreffenden Verbindung übertragen wurde. Der Inhalt des Speicherplatzes gibt also die augenblicklich aktive Übertragungsstrecke an. Zusätzlich wird pro Übertragungsstrecke p der niederwertige Teil der Folgenummer s im Platz SC(p) pro Verbindung gespeichert.

In der Auswahleinrichtung wird überprüft, ob eine ankommende Nachrichtenzelle bezüglich ihrer Folgenummer diejenige ist, die für die betreffende virtuelle Verbindung die auf die zuletzt weitergeleitete Nachrichtenzelle bezüglich ihrer Folgenummer nächstfolgend weiterzuleitende ist. Dazu wertet ein Rekombinations - Algorithmus die in der Speicherzeile für die betreffende virtuelle Verbindung abgespeicherte Folgenummer und den Inhalt des Speicherplatzes aus. Die Ermittlung der nächstfolgenden Nachrichtenzelle kann vorteilhafterweise dadurch erfolgen, daß die abgespeicherte Folgenummer der zuletzt weitergeleiteten Nachrichtenzelle abgelegt wird und die Folgenummer einer gerade durchgeschalteten Nachrichtenzelle mit der inkrementierten gespeicherten Folgenummer verglichen wird. Dabei beschränkt sich die Ermittlung der nächstfolgenden Nachrichtenzelle auf einen in einfacher Weise durchzuführenden Vergleich der Folgenummern.

Im Allgemeinen wird die als erste in der Ausgangseinrichtung ankommende Nachrichtenzelle einer Gruppe von Nachrichtenzellen weitergeleitet. Eine Nachrichtenzelle, die später in der Auswahleinrichtung ankommt als eine zur selben Gruppe gehörige Nachrichtenzelle, die zuvor zur Weiterleitung ausgewählt ist, wird verworfen. Besondere Rekombinations - Algorithmen zur Bestimmung der für eine virtuelle Verbindung jeweils nächsten weiterzuleitenden Nachrichtenzelle sind beispielsweise aus der EP-0 384 936, EP-0 453 606 oder EP-0 453 607 bekannt.

Die Auswahleinrichtung weist für jede Übertragungsstrecke einen Zähler C (für: Condition Monitor Counter) auf. Der Zählerstand eines Zählers wird für eine als fehlerfrei und mit der erwarteten Folgenummer empfangene und zur Weiterbehandlung bestimmte Nachrichtenzelle - falls die Nachrichtenzelle über die dem Zähler zugehörige Übertragungsstrecke ankommt - um einen ersten Wert erhöht wird und - falls die Nachrichtenzelle fehlerhaft oder nicht mit der erwarteten Folgenummer empfangen wird - um einen zweiten Wert erniedrigt wird. Die Wahl der Größen des ersten und des zweiten Wertes ist so getroffen, daß es unter Berücksichtigung des Anteils einer Übertragungsstrecke an der Gesamtzahl der Übertragungsstrekken einer größeren Anzahl von über eine betrachtete Übertragungsstrecke übertragenen und zur Weiterbehandlung bestimmter Nachrichtenzellen bedarf um den Zählerstand des zugehörigen Zählers um einen vorgegebenen Betrag zu erhöhen, als die Anzahl von anderen als der betrachteten Übertragungsstrecke übertragenen und zur Weiterbehandlung bestimmten Nachrichtenzellen um den Zählerstand des der betrachteten Übertragungsstrecke zugehörigen Zählers um den vorgegebenen Betrag zu erniedrigen. In einem Übertragungssystem mit nur zwei Übertragungsstrecken mag für eine Übertragungsstrecke der Zählerstand des zugehörigen Zählers für jede Nachrichtenzelle, die nicht die mit der erwarteten Folgenummer ist, um den Wert 2 erniedrigt werden und für jede Nachrichtenzelle, deren Folgenummer auf dem Bit an der 4. Stelle einen Wechsel vom hohen Zustand (High) zum niedrigen Zustand (Low) hat, um den Wert 1 erhöht werden. Erreicht der Zählerstand einen vorgegebenen unteren Schwellwert US, wird für die zugehörige Übertragungsstrecke ein Zustandszeichen Q (für: Quality) zurückgesetzt. Der untere Schwellwert US mag durch den Ausgangszustand des Zählers, bei dem der Zählerstand den Wert Null aufweist, gegeben sein. Ein zurückgesetztes Zustandszeichen Q gibt an, daß die zugehörige Übertragungsstrecke für die Auswahl zur Annahme von weiterzubehandelnden Nachrichtenzellen ausgeschlossen ist.

Die anhaltende Rate von tolerierten Fehlern in der Reihenfolge beträgt einen Fehler in der Reihenfolge auf X*2^{Y} Nachrichtenzellen in Folge, wobei X für den kleineren Wert und Y für die Stelle des Bits der Folgenummer einer Nachrichtenzelle, bei dessen Wechsel vom hohen Zustand (High) zum niedrigen Zustand (Low) ein Zähler inkrementiert wird, steht. Wird für X=2 und für Y=4 gewählt, wird eine Rate von Fehlern in der Reihenfolge, die größer als ungefähr 3,2 % ist, als Ausfall der betreffenden Übertragungsstrecke erkannt.

Es ist erforderlich, daß eine Anzahl von Fehlern in der Reihenfolge auftritt, bis ein Ausfall einer Übertragungsstrecke konstatiert wird. Die tatsächliche Anzahl hängt von dem kleinen Wert X und der Fehlerrate ab. Falls jede ankommende Nachrichtenzelle eine unzutreffende Folgenummer hat, dann müssen OS/X Nachrichtenzellen ankommen, bis ein Ausfall der betreffenden Übertragungsstrecke konstatiert wird. Bei Wahl des Wertes 2 für den kleinen Wert X ist es sehr unwahrscheinlich, daß eine Übertragungsstrecke nur deswegen für die Auswahl zur Annahme von weiterzubehandelnden Nachrichtenzellen ausgeschlossen wird, weil es aufgrund eines auf der Übertragungsstrecke zu einem mit einer Wahrscheinlichkeit von 10⁻⁵ auftretenden Überlauf eines Puffers zu einem scheinbaren Verlust von Nachrichtenzellen gekommen ist.

Zum Setzen eines Zustandszeichens Q ist vorgesehen, daß der zugehörige Zählerstand einen oberen Schwellwert OS, der durch den höchsten darstellbaren Wert des Zählers gegeben sein mag, erreicht. Dies heißt, daß die zugehörige Übertragungsstrecke erst über einen längeren Zeitraum zu einem hohen Prozentsatz Nachrichtenzellen fehlerfrei übertragen haben muß, bis sie für die Auswahl zur Annahme von weiterzubehandelnden Nachrichtenzellen zugelassen wird. Das Zustandszeichens Q ist durch eine Folge von Nachrichtenzellen, die ohne jeden Fehler in der Reihenfolge ist und die eine Länge von OS*2^{Y} Nachrichtenzellen aufweist, setzbar. Im Beispiel mit OS =7 und Y=4 sind das 112 Nachrichtenzellen.

Beim anmeldungsgemäßen Gegenstand ist durch die unterschiedlichen Schwellwerte für das Zulassen bzw. Ausschließen einer Übertragungsstrecke für die Auswahl zur Annahme von weiterzubehandelnden Nachrichtenzellen eine Hysterese und damit eine Schmitt-Trigger-Funktion gegeben. Dabei bedarf es beim Durchlaufen der Zählerzustände in Richtung zum Ausschluß einer Übertragungsstrecke einer kleineren Anzahl von in fehlerhafter Reihenfolge ankommender Nachrichtenzellen gegenüber der größeren Anzahl von in richtiger Reihenfolge ankommender Nachrichtenzellen, die zum Durchlaufen der Zählerzustände in Richtung zur Zulassung einer Übertragungsstrecke führen. In fehlerhafter Reihenfolge ankommende Nachrichtenzellen führen also schneller zu einem Sperren einer Übertragungsstrecke, gegenüber in richtiger Reihenfolge ankommende Nachrichtenzellen, die langsamer zu einem Zulassen einer Übertragungsstrekke führen.

Ist eine augenblicklich ausgeschlossene Übertragungsstrecke diejenige, die die augenblicklich als letzte zur Weiterbehandlung angenommene Nachrichtenzelle übertragen hat (aktive Übertragungsstrecke), wird auf eine verbleibende Übertragungsstrecke, für den ein Zustandszeichen Q nicht zurückgesetzt ist, umgeschaltet. Die Umschaltung mag auf die nach der Benennung zyklisch nächstfolgende Übertragungsstrecke erfolgen. Nach der Umschaltung wird die erste als fehlerfrei empfangene Nachrichtenzelle weiterbehandelt. Als nächste wird dann diejenige Nachrichtenzelle ermittelt, die die auf diese erste Nachrichtenzelle nächstfolgende Folgenummer aufweist.

Die Umschaltung kann durch einen der Ausgangseinrichtung zugeordneten Boardcontroller erfolgen.

In einer besonderen Weiterbildung des Anmeldungsgegenstandes wird das Zurücksetzen des Zustandszeichens Q von einem Operator manuell bewirkt.

Verbleibt nur eine zugelassene Übertragungsstrecke, kann vorgesehen sein, daß jede von dieser Übertragungsstrecke als fehlerfrei empfangene Nachrichtenzelle zur Weiterbehandlung ausgewählt wird.

Sind sämtliche Übertragungsstrecken für die Auswahl zur Annahme von weiterzubehandelnden Nachrichtenzellen ausgeschlossen, kann vorgesehen sein, daß jede als fehlerfrei empfangene Nachrichtenzelle zur Weiterbehandlung ausgewählt wird.

Figur 3 zeigt eine den anmeldungsgemäßen Algorithmus realisierende Ablauffolge für eine mit p bezeichnete Übertragungsstrecke. Zu Punkt (1) wird die Ablauffolge bei Ankunft einer Nachrichtenzelle gestartet. Zu Punkt (2) wird geprüft, ob die augenblicklich ankommende Nachrichtenzelle bezüglich ihrer Folgenummer die nächstfolgende Nachrichtenzelle auf die bislang als letzte angekommene Nachrichtenzelle bezüglich ihrer Folgenummer ist. Bei negativem Abfrageergebnis (No) wird mit Punkt (3) fortgefahren, bei dem der Zählerstand C der zugehörigen Übertragungsstrecke p um den Wert X verringert wird. Nach Punkt (3) wird mit Punkt (4) fortgefahren, bei dem überprüft wird, ob der Zählerstand C der zugehörigen Übertragungsstrecke p den unteren Schwellwert 0 (Null) erreicht hat. Bei positivem Abfrageergebnis (Yes) wird mit Punkt (5) fortgefahren, bei dem das Zustandszeichen Q der zugehörigen Übertragungsstrecke p auf den Wert 0 (Null) zurückgesetzt wird. Das Zustandszeichen mit dem Wert Null bezeichnet eine fehlerhafte Übertragungsstrecke und bewirkt für den Fall, daß die Auswahleinrichtung augenblicklich auf diese Übertragungsstrecke als aktive Übertragungsstrecke eingerastet war, eine Umschaltung auf eine andere Übertragungsstrecke. Nach Punkt (5) wird mit Punkt (6) fortgefahren, bei dem für die betrachtete Übertragungsstrecke p die niederwertigen 6 Bits der Folgenummer s der augenblicklich angekommenen Nachrichtenzelle in dem Platz SC(p) abgespeichert wird. Ist das Abfrageergebnis bei Punkt (4) nicht positiv, wird mit Punkt (6) fortgefahren. Ist das Abfrageergebnis bei Punkt (2) positiv (Yes), wird mit Punkt (8) fortgefahren, bei dem abgefragt wird, ob die Folgenummer s der augenblicklich angekommenen Nachrichtenzelle auf dem Bit an der Y-sten Stelle einen Wechsel vom hohen Zustand (High) zum niedrigen Zustand (0, Low) hat. Die Abfrage zu Punkt (8) hat also die Funktion eines Teilers für die Folgenummern der ankommenden Nachrichtenzellen. Bei positivem Abfrageergebnis (Yes) wird mit Punkt (9) fortgefahren, bei dem der Zählerstand C der zugehörigen Übertragungsstrecke p um den Wert 1 inkrementiert wird. Nach Punkt (9) wird mit Punkt (10) fortgefahren, bei dem überprüft wird, ob der Zählerstand C(p) der zugehörigen Übertragungsstrecke p den oberen Schwellwert 7 erreicht hat. Bei positivem Abfrageergebnis (Yes) zu Punkt (10) wird mit Punkt (11) fortgefahren, bei dem das Zustandszeichen Q der zugehörigen Übertragungsstrecke p auf den Wert 1 gesetzt wird. Nach Punkt (11) wird mit Punkt (6) fortgefahren. Bei negativem Abfrageergebnis (No) zu Punkt (8) wird unmittelbar mit Punkt (10) fortgefahren. Ist das Abfrageergebnis bei Punkt (10) nicht positiv, wird mit Punkt (6) fortgefahren. Nach Punkt (6) wird mit Punkt (7) fortgefahren, bei dem der augenblickliche Durchlauf der Ablauffolge beendet ist.

Der Anmeldungsgegenstand wurde zwar teilweise der einfacheren und klareren Darstellbarkeit halber nur für zwei Übertragungsstrecken dargestellt, was jedoch die vermittelte Lehre auf Übertragungssysteme mit einer größeren Anzahl von Übertragungsstrecken nicht beschränkt.

Dem Prinzip, wonach eine einzige Übertragungsstrecke nach Auftreten einer kleinen Anzahl von Fehlern in der Reihenfolge der übertragenen Nachrichtenzellen gesperrt wird, wohingegen für eine Zulassung der Übertragungsstrecke eine große Anzahl aufeinanderfolgender Nachrichtenzellen ohne Fehler in der Reihenfolge erforderlich ist, kommt selbständige Bedeutung zu.

## Patentansprüche

1. Verfahren zur Abschaltung bzw. Zuschaltung einer Übertragungsstrecke mit fehlerhaftem Übertragungsverhalten in einem Übertragungssystem, in dem redundante Nachrichtenzellen über redundante Übertragungsstrecken übertragen werden, demzufolge
- den Nachrichtenzellen einer virtuellen Verbindung zyklisch fortlaufende Folgenummern zugeordnet sind,
- eine Nachrichtenzelle zu einer Gruppe von zueinander redundanten Nachrichtenzellen, deren Anzahl der Anzahl von redundanten Übertragungsstrecken gleich, vermehrfacht wird,
- über die redundanten Übertragungsstrecken jeweils eine von zueinander redundanten Nachrichtenzellen übertragen werden,
- nach Maßgabe der von den Nachrichtenzellen mitgeführten Folgenummern nur eine redundante Nachrichtenzelle, die als nächste auf die augenblicklich als letzte weiterbehandelte Nachrichtenzelle folgt, zur Weiterbehandlung ausgewählt wird,
- für jede Übertragungsstrecke die Folgenummer der zuletzt übertragenen Nachrichtenzelle abgespeichert wird,
- daß die Folgenummer einer augenblicklich ankommenden Nachrichtenzelle mit der für die betreffende Übertragungsstrekke abgespeicherten Folgenummer verglichen wird,
- nach Maßgabe des Vergleichsergebnisses entschieden wird, ob die augenblicklich angekommene Nachrichtenzelle zur Weiterbehandlung angenommen wird, **dadurch gekennzeichnet daß**
- für jede Übertragungsstrecke ein Zählerstand vorgehalten wird,
- im Falle einer Annahme der augenblicklich angekommenen Nachrichtenzelle zur Weiterbehandlung der Zählerstand der betreffenden Übertragungsstrecke um einen ersten Wert erhöht wird,
- im Falle einer falschen Folgenummer der augenblicklich angekommenen Nachrichtenzelle der Zählerstand der betreffenden Übertragungsstrecke um einen zweiten Wert erniedrigt wird,
- eine Übertragungsstrecke, deren Zählerstand einen unteren Schwellwert erreicht, von der Annahme von Nachrichtenzellen zur Weiterbehandlung ausgeschlossen wird.

2. Verfahren nach Anspruch 1,
**dadurch gekennzeichnet,**
**daß** der erste Wert kleiner als der zweite Wert ist.

3. Verfahren nach einem der vorstehenden Ansprüche,
**dadurch gekennzeichnet,**
**daß** vor dem Vergleich der Folgenummern eine Prüfung auf Fehlerhaftigkeit der Nachrichtenzelle erfolgt.

4. Verfahren nach einem der vorstehenden Ansprüche,
**dadurch gekennzeichnet,**
**daß** eine Zulassung einer Übertragungsstrecke zur Annahme von Nachrichtenzellen erst nach Erreichen eines oberen Schwellwertes erfolgt.

5. Verfahren nach Anspruch 4,
**dadurch gekennzeichnet,**
**daß** einer Übertragungsstrecke ein Zustandszeichen (Q(p)) zugeordnet ist, das bei Erreichen des unteren Schwellwertes zurückgesetzt wird und das bei Überschreiten des oberen Schwellwertes gesetzt wird, wobei der Ausschluß bzw. die Zulassung der zugehörigen Übertragungsstrecke nach Maßgabe des Zustandszeichens gegeben ist.

6. Verfahren nach Anspruch 5
**dadurch gekennzeichnet,**
**daß** die Zustandszeichen Q für alle bis auf einen Übertragungsweg unabhängig von den zugehörigen Zählerständen zurückgesetzt werden.

7. Verfahren nach einem der vorstehenden Ansprüche,
**dadurch gekennzeichnet,**
**daß** die Zählerstände bei Inbetriebnahme auf einen vorgegebenen Wert eingestellt werden.

## Claims

1. Method for shutting down or switching in a transmission link having errored transmission characteristics in a transmission system in which redundant information cells are transmitted via redundant transmission links, according to which
- cyclically consecutive sequence numbers are allocated to the information cells of a virtual connection,
- an information cell is multiplied to form a group of mutually redundant information cells, the number of which is equal to the number of redundant transmission links,
- in each case one of mutually redundant information cells is transmitted via the redundant transmission links,
- only one redundant information cell which is the next one to follow the information cell currently processed further as the last one is selected for further processing as determined by the sequence numbers carried by the information cells,
- for each transmission link, the sequence number of the information cell transmitted last is stored,
- the sequence number of an information cell currently arriving is compared with the sequence number stored for the relevant transmission link,
- in accordance with the determination of the result of the comparison, a decision is made whether the information cell currently arrived is accepted for further processing,
**characterized in that**
- for each transmission link, a count is reserved,
- in the case of an acceptance of the currently arrived information cell for further processing, the count of the relevant transmission link is incremented by a first value,
- in the case of a wrong sequence number of the currently arrived information cell, the count of the relevant transmission link is decremented by a second value,
- a transmission link, the count of which reaches a lower threshold value, is excluded from the acceptance of information cells for further processing.

2. Method according to Claim 1, **characterized in that** the first value is smaller than the second value.

3. Method according to one of the preceding claims, **characterized in that** before the comparison of the sequence numbers, a check for faultiness of the information cell is effected.

4. Method according to one of the preceding claims, **characterized in that** a transmission link is admitted for acceptance of information cells only after an upper threshold value is reached.

5. Method according to Claim 4, **characterized in that** a transmission link is allocated a status sign (Q(p)) which is reset when the lower threshold value is reached and which is set when the upper threshold value is exceeded, the exclusion or admission of the associated transmission link being given as determined by the status sign.

6. Method according to Claim 5, **characterized in that** the status signs Q are reset for all bar one transmission path independently of the associated counts.

7. Method according to one of the preceding claims, **characterized in that** the counts are set to a predetermined value on initial start-up.

## Revendications

1. Procédé pour la déconnexion et la connexion d'un trajet de transmission avec un comportement à la transmission erroné dans un système de transmission dans lequel des cellules de messages redondantes sont transmises au moyen de trajets de transmission redondants, selon lequel
- des numéros de succession continus de façon cyclique sont attribués aux cellules de messages d'une liaison virtuelle,
- une cellule de message est multipliée pour former un groupe de cellules de messages redondantes les unes par rapport aux autres, dont le nombre est égal au nombre de trajets de transmission redondants,
- à chaque fois une des cellules de messages redondantes les unes par rapport aux autres est transmise par les trajets de transmission redondants,
- en fonction des numéros de succession emportés par les cellules de messages uniquement une cellule de message redondante, qui suit en tant que prochaine cellule la cellule de message retraitée momentanément en dernier, est sélectionnée pour le retraitement,
- le numéro de succession de la cellule de message transmise en dernier est mémorisé pour chaque trajet de transmission,
- le numéro de succession d'une cellule de messages arrivant momentanément est comparé avec le numéro de succession mémorisé pour le trajet de transmission concerné,
- en fonction du résultat de la comparaison, on décide si la cellule de message arrivée momentanément est acceptée pour le retraitement, **caractérisé en ce que**
- une indication de compteur est présentée pour chaque trajet de transmission,
- dans le cas d'une acceptation de la cellule de message arrivée momentanément pour le retraitement, l'indication du compteur du trajet de transmission concerné est augmentée d'une première valeur,
- dans le cas d'un mauvais numéro de succession de la cellule de message arrivée momentanément, l'indication du compteur du trajet de transmission concerné est abaissée d'une seconde valeur,
- un trajet de transmission, dont l'indication de compteur atteint une valeur seuil inférieure, est exclu de l'acceptation de cellules de messages pour le retraitement.

2. Procédé selon la revendication 1, **caractérisé en ce que**
la première valeur est inférieure à la seconde valeur.

3. Procédé selon l'une quelconque des revendications précédentes,
**caractérisé en ce que**
un contrôle au niveau de la présence d'erreurs dans la cellule de message intervient avant la comparaison des numéros de succession.

4. Procédé selon l'une quelconque des revendications précédentes,
**caractérisé en ce que**
une homologation d'un trajet de transmission pour l'acceptation de cellules de messages n'intervient qu'après avoir atteint une valeur seuil supérieure.

5. Procédé selon la revendication 4,
**caractérisé en ce que**
à un trajet de transmission est attribué un caractère d'état (Q(p)) qui est remis à zéro lorsque la valeur seuil inférieure est atteinte et qui est fixé en cas de dépassement de la valeur seuil supérieure, l'exclusion ou l'homologation du trajet de transmission spécifique étant donnée en fonction du caractère d'état.

6. Procédé selon la revendication 5,
**caractérisé en ce que**
les caractères d'état Q sont remis à zéro pour toutes les voies de transmission à l'exception d'une indépendamment des indications de compteur spécifiques.

7. Procédé selon l'une quelconque des revendications précédentes,
**caractérisé en ce que**
les indications de compteur sont réglées lors de la mise en service sur une valeur prédéfinie.
